# FASCICULE DE BREVET EUROPEEN

(11) **EP 0 855 332 B1**
(45) Date de publication et mention de la délivrance du brevet: **25.04.2001**
(21) Numéro de dépôt: 98400070.3
(22) Date de dépôt: 16.01.1998
(51) Int. Cl.: B62D 5/06, B60R 21/00, F15B 1/26

(54) **Dispositif de sécurité pour récipient de véhicule automobile**
Sicherheitsvorrichtung für Kraftfahrzeugbehälter
Safety device for a container in a vehicle

(30) Priorité: 20.01.1997 FR 9700538
(43) Date de publication de la demande: 29.07.1998
(73) Titulaire: AUTOMOBILES PEUGEOT, 75116 Paris (FR); AUTOMOBILES CITROEN, 92200 Neuilly-sur-Seine (FR)
(72) Inventeur: Goly, Fabrice M., 95610 Eragny Sur Oise (FR)
(74) Mandataire: Gendraud, Pierre

(56) Documents cités:
- DE-A- 2 049 405
- US-A- 3 426 937
- US-A- 4 424 829

## Description

La présente invention concerne un dispositif de sécurité contre les effets d'un éclatement de récipient dans un véhicule automobile lors d'un choc important, tel qu'un accident frontal de ce dernier.

Elle se rapporte plus particulièrement à un dispositif de sécurité pour récipients ou réservoirs logés dans un compartiment moteur de véhicule et destinés à contenir un liquide inflammable ou corrosif, notamment pour direction assistée, le dispositif visant à éviter, lors d'un accident, une projection nuisible dudit liquide, par exemple sur des organes portés à haute température, tel que l'échappement, ce qui entraînerait des risques d'incendie.

On connaît déjà un tel dispositif du type comprenant un réservoir tel que susmentionné qui est pourvu de parois blindées ou bien encore qui est logé dans un environnement blindé de manière à empêcher la destruction du réservoir.

Un tel dispositif donne pleinement satisfaction mais a pour conséquence d'augmenter considérablement la masse, l'encombrement et le prix du réservoir.

On connaît également des dispositifs consistant à implanter les réservoirs dans des zones peu vulnérables. L'inconvénient majeur de tels dispositifs réside dans le fait que ces zones sont limitées et que l'architecture du véhicule ne permet pas toujours leur présence.

Le document DE 2 049 405 A décrit un réservoir entouré d'une enveloppe constituée de caoutchouc ou d'un élastomère. Cependant, ce type de réservoir de sécurité ne donne pas entière satisfaction.

Le but de l'invention est de remédier aux inconvénients mentionnés ci-dessus.

A cet effet, la présente invention a pour objet un dispositif de sécurité pour réservoirs fragiles logés dans le compartiment moteur d'un véhicule automobile et destinés à contenir un liquide inflammable ou corrosif, le réservoir est entouré d'une enveloppe souple recouvrant ses parois extérieures remarquable en ce que ladite enveloppe est pourvue d'au moins une ouverture distincte de la ou des ouvertures prévues au droit du ou des orifices du réservoir, tels que les orifices destinés au remplissage, au pompage ou au refoulement du liquide.

Selon une autre caractéristique avantageuse de l'invention, l'enveloppe comporte une ouverture située au droit du fond du réservoir.

D'autres caractéristiques et avantages de l'invention apparaîtront à la lecture de la description détaillée qui va suivre, pour la compréhension de laquelle on se reportera aux dessins annexés, dans lesquels:
- la figure 1 est une vue en coupe du réservoir pourvu du dispositif de sécurité selon l'invention ; et
- la figure 2 est une vue en coupe du même réservoir lorsque celui-ci a subi un choc.

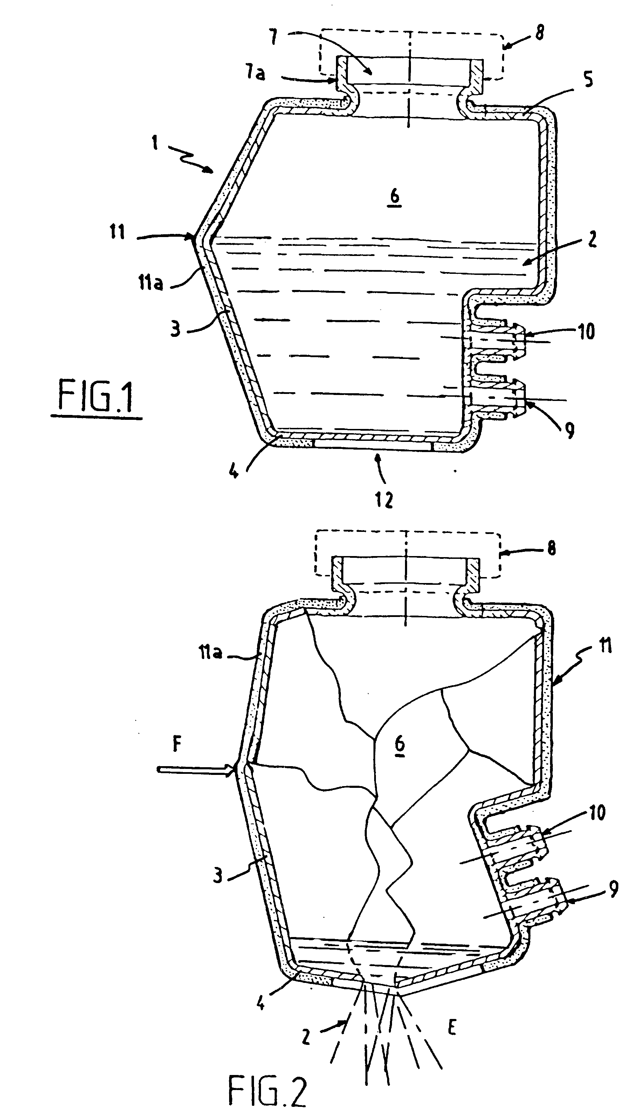

On a représenté sur la figure 1, un réservoir 1 pour circuit hydraulique de direction assistée, destiné à contenir un liquide 2, dans le cas présent de l'huile, mais il est bien entendu qu'un tel réservoir 1 peut contenir tout autre liquide inflammable ou corrosif pour un but différent.

Le réservoir 1 est, de façon usuelle non représentée, logé dans le compartiment moteur du véhicule et sous le capot de celui-ci.

Le réservoir 1, parfois désigné bocal, est réalisé par moulage d'une matière plastique dure telle que du polyamide, et comporte des parois latérales 3, un fond 4 et une face supérieure 5 de manière à délimiter une enceinte 6 pour contenir le liquide 2.

La face supérieure 5 est pourvue d'une goulotte 7 destinée au remplissage du réservoir 1. Une fois celui-ci rempli de liquide 2, il est fermé par un bouchon 8 fixé par vissage sur la partie supérieure 7a externe de la goulotte 7.

Sur l'une des parois latérales 3 du réservoir, et débouchant de l'enceinte 6, il est prévu d'une part un premier orifice 9 relié à une pompe, non représentée, du circuit de direction assistée par un conduit d'aspiration, et d'autre part un second orifice 10, relié par un conduit de refoulement à un autre élément de ce circuit.

Selon la présente invention, le réservoir 1 est équipé d'un dispositif de sécurité 11 contre les effets d'un éclatement susceptible de se produire lors d'un choc important ; ce dispositif est constitué d'une enveloppe 11a en matière souple, difficilement perforable ou déchirable, surmoulée sur les parois extérieures 3,4,5 du réservoir 1.

De préférence, l'enveloppe est réalisée en caoutchouc ou dans un matériau similaire.

L'enveloppe 11 est pourvue d'une ouverture 12, dans le cas présent, située au droit du fond 4 du réservoir 1.

Ainsi, lors d'un choc, dû notamment à un accident frontal du véhicule, le compartiment moteur se déforme, ce qui entraîne, comme visible à la figure 2, une déformation du réservoir 1 sous l'action d'une force F schématisant la poussée d'éléments du compartiment moteur.

On a représenté schématiquement pour la description le cas d'une poussée frontale F sur le réservoir 1 mais le dispositif donne entière satisfaction quelle que soit la direction de l'effort exercé sur ledit réservoir.

Cette déformation engendre le bris ou l'éclatement des parois du réservoir en plusieurs morceaux, notamment par suite d'une montée en pression à l'intérieur de l'enceinte 6 et d'une faible plasticité du bocal.

L'enveloppe de protection 11a du dispositif de sécurité 11 permet par sa souplesse de se déformer sans se déchirer et de maintenir les morceaux des parois latérales 3 du réservoir 1.

L'enveloppe comporte des ouvertures au droit des orifices 7,9,10, et une ouverture 12 dans sa partie inférieure pour éviter la projection du liquide vers des zones chaudes du compartiment moteur lors de l'éclatement du réservoir, en dirigeant l'écoulement E du liquide vers une zone sans risque, et notamment non susceptible d'être très chaude.

Avantageusement, un tel dispositif a pour conséquence de réduire la vitesse d'évacuation du liquide et sa pulvérisation qui risquent de provoquer un incendie en cas de liquide inflammable, au contact de surfaces très chaudes, telles que celles de conduits d'échappement du moteur du véhicule.

En variante, on notera qu'il est possible de prévoir l'ouverture 12 de l'enveloppe 11 au droit de l'une des parois latérales 3.

Un tel dispositif permettant d'éviter toute projection de liquide et par conséquent tous risques d'incendie s'avère particulièrement simple à réaliser.

## Revendications

1. Dispositif de sécurité pour récipient ou réservoir logé dans le compartiment moteur d'un véhicule automobile et destiné à contenir un liquide inflammable ou corrosif,
le réservoir (1) étant entouré d'une enveloppe (11a) en matière souple recouvrant ses parois extérieures (3,4,5),
caractérisé en ce que ladite enveloppe (11) est pourvue d'au moins une ouverture (12) distincte de la ou des ouvertures prévues au droit du ou des orifices (7, 9, 10) du réservoir (1), tels que les orifices destinés au remplissage, au pompage ou au refoulement du liquide.

2. Dispositif selon la revendication 1,
caractérisé en ce que l'enveloppe (11) comporte une ouverture (12) située au droit du fond (4) du réservoir (1).

3. Dispositif selon l'une des revendications précédentes,
caractérisé en ce que l'enveloppe (11a) est réalisé en caoutchouc ou dans un matériau similaire difficilement perforable ou déchirable.

## Patentansprüche

1. Sicherheitsvorrichtung für einen Behälter oder Vorratsbehälter, der im Motorraum eines Kraftfahrzeuges sitzt und dazu bestimmt ist, eine entzündliche oder korrosive Flüssigkeit zu enthalten, wobei der Vorratsbehälter (1) von einer Umhüllung (11a) aus weichem Material umgeben ist, die seine Außenwände (3, 4, 5) abdeckt, dadurch gekennzeichnet, daß die genannte Umhüllung (11) mit mindestens einer Öffnung (12) versehen ist, die sich von der oder den Öffnung(en) unterscheidet, die an der oder den Mündung(en) (7, 9, 10) des Vorratsbehälters (1) vorgesehen sind, wie den Mündungen, die zum Füllen, zum Pumpen oder zur Entleerung der Flüssigkeit vorgesehen sind.

2. Vorrichtung nach Anspruch 1, dadurch gekennzeichnet, daß die Umhüllung (11) eine Öffnung (12) aufweist, die am Boden (4) des Vorratsbehälters (1) sitzt.

3. Vorrichtung nach einem der vorangehenden Ansprüche, dadurch gekennzeichnet, daß die Umhüllung (11a) aus Gummi oder einem ähnlichen Material hergestellt ist, das schwer perforierbar oder einreißbar ist.

## Claims

1. Safety device for a container or reservoir housed in the engine compartment of a motor vehicle and intended to contain an inflammable or corrosive liquid, the reservoir (1) being surrounded by a casing (11a) made of flexible material covering its outer walls (3, 4, 5),
characterised in that said casing (11) is provided with at least one opening (12) distinct from the opening(s) provided in line with the orifice(s) (7, 9, 10) of the reservoir (1), such as the orifices intended for filling, pumping or discharging the liquid.

2. Device according to Claim 1,
characterised in that the casing (11) comprises an opening (12) located level with the bottom (4) of the reservoir (1).

3. Device according to one of the preceding claims,
characterised in that the casing (11a) is made of rubber or a similar material that is difficult to perforate or tear.
